# EUROPEAN PATENT APPLICATION

(11) **EP 2 239 644 A1**
(43) Date of publication of application: **13.10.2010**
(21) Application number: 09157492.1
(22) Date of filing: 07.04.2009
(51) Int. Cl.: G05D 23/24

(54) **Control system for a domestic appliance**

(71) Applicant: Koninklijke Philips Electronics N.V., 5621 BA Eindhoven (NL)
(72) Inventor: The designation of the inventor has not yet been filed
(74) Representative: Damen, Daniel Martijn

(57) **Abstract**

A control system (1) for controlling a heating element (6) for heating a fluid in an electrical appliance (2) is provided. The control system at least comprises an electrical network (4) adapted to supply power from a power main (28) to the heating element of the electrical appliance, at least one of an electric current measurement device (12) and an electric potential difference measurement device (22), a control unit (14) for determining a heating element input parameter value at least based on the measured current value and/or the measured voltage value and comparing said determined input parameter value with a predetermined heating element parameter value stored in the control unit. The control unit is further adapted to interrupt a power supply to the heating element in case the heating element input parameter value is exceeding the predetermined parameter value to prevent uncontrolled heating of the heating element.

## Description

### FIELD OF THE INVENTION

The invention relates to a control system for an electrical appliance, such as a domestic appliance, that comprises a heating element for heating a fluid provided in the electrical appliance, and more in particular to the control of the heating element of said electrical appliance.

### BACKGROUND OF THE INVENTION

An electrical appliance comprising a fluid reservoir and a heating element arranged for heating said fluid has the capability to heat the fluid to a desired temperature. The desired temperature may be dependent on the kind of electrical appliance and the purpose of the heated fluid. For instance, in a domestic appliance such as a coffee machine, the fluid may be heated to a temperature between 80°-100°C to prepare a beverage. In a domestic appliance such as a steam iron, the fluid may be heated to at least boiling temperature to be able to generate steam.

In order to heat the fluid, the fluid is brought in contact with the heating element provided in said appliance. The temperature of the heating element is raised by supplying power to the element such that the temperature of the fluid being in contact with the heating element is increased. When the desired temperature of the fluid is reached, the heating element is switched off. To switch off the heating element, the electrical appliance may be provided with temperature sensing devices such as a NTC or a PTC element. Such a NTC or a PTC element enables to determine a temperature of the water in the appliance due to decreasing or increasing electrical resistance of the NTC or PTC, respectively. When the temperature reaches the desired level, the heating element is switched off.

However, in any electrical appliance in which water is heated by a heating element there is a possible risk that for different reasons the heating element is not automatically switched off when the fluid temperature in the appliance has reached the desired level. For instance, electronic components in the appliance may fail, or the temperature sensing may be incorrect for instance by scale accumulation in the appliance. In the case the heating element is not switched off, the appliance may reach a state of uncontrolled heating. In other words, the heating element may continue to heat the fluid that already reached the desired temperature resulting in the fluid reaching a boiling temperature and/or continuous boiling of the fluid. While continuing heating the fluid, steam may be generated that may for instance be able to leave the appliance. However, in case a possible outlet opening that enables the steam to leave the appliance has a limited size, for instance due to scale forming in the appliance or by unintended use by a user of the appliance, the steam may not leave the appliance fast enough. Consequently, pressure may build up inside the appliance that, in case the pressure exceeds a material strength limit of the appliance, can result in a separation of at least parts of the appliance. As can be understood, the build up pressure inside the appliance may in the end lead to unsafe situations and even injuries for the user of the appliance.

### SUMMARY OF THE INVENTION

It is an object of the present invention to provide a control system for the heating element of an electrical appliance that may overcome the above mentioned problem. More in particular it is an object of the invention to provide a control system that is able to minimize or avoid the risk of uncontrolled heating of the heating element of an electrical appliance.

According to an aspect of the present invention, a control system is provided for controlling a heating element for heating a fluid in an electrical appliance, wherein the control system comprises following components:
an electrical network adapted to supply power from a power main to at least the heating element of the electrical appliance;
at least one of an electric current measurement device for measuring a current value in said network during operation of the electrical appliance, and an electric potential difference measurement device for measuring a voltage value in said network during operation of the electrical appliance;
a control unit for determining a heating element input parameter value at least based on the measured current value and/or the measured voltage value and comparing said determined input parameter value with a predetermined heating element parameter value stored in the control unit;
wherein the control unit is further adapted to interrupt a power supply to at least the heating element in case the heating element input parameter value is exceeding the predetermined parameter value.

Due to such a system that is provided between the heating element of an electrical appliance and the power main that supplies power to the heating element, the power supply may be interrupted solely based on measurements of input values to the heating element in case of occurrence of uncontrolled heating. By doing so, the interruption of the power supply may be directly dependent on values that can be determined in a relatively accurate way and be compared to predetermined heating element parameter values. By measuring a voltage value and/or a current value in the wires that are connected to the heating element during operation of the appliance, a heating element input parameter value can be determined. The determined input parameter value may then be compared to a predetermined heating element value. The predetermined heating element parameter value comprises a maximum value that may be reached by the appliance before separation of at least part of the appliance may occur. The predetermined heating element parameter value may be stored in the control unit of the control system. When the determined input parameter value exceeds the predetermined heating element parameter value, the control unit may control the power supply to the heating element by interrupting it. Consequently, the risk of uncontrolled heating due to malfunctioning components in the appliance is minimized. Furthermore, the interruption of power supply in case of uncontrolled heating is not dependent on parameters that may be influenced by a user of the electrical appliance, for instance due to lack of de-scaling of the appliance.

The heating element input parameter value may be based on one of the measured current value or the measured voltage value. In that case, the resistance value that is provided by for instance the manufacturer of the electrical appliance may be stored in the control unit. By measuring either one of the current value or the voltage value during the heating cycle of the heating element and taking the value of the resistance of the heating element into account, the actual heating cycle time interval may be monitored. By comparing the determined heating cycle time interval with a predetermined time interval value, the control unit can interrupt the power supply in case the latter time interval value exceeds the determined heating cycle time interval.

In case the heating element input parameter value is at least based on both the measured current value and the measured voltage value, the heating cycle time interval may be easily determined without taking the indicated resistance value of the heating element, as provided by the manufacturer, into account. Consequently, small deviations of the indicated resistance value do not influence the determination of the heating element input parameter value. Furthermore, by using both the measured current value and the measured voltage value, the heating element input parameter may also be a maximum resistance value of the heating element or a resistance slope of the heating element during at least part of the heating cycle time interval.

The invention also relates to a safety device for controlling a heating element for heating a fluid of an electrical appliance, said safety device comprising the above described control system, the device further comprising:
- a housing enclosing the components of the control system;
- a first connector for electrically coupling the safety device to the electrical appliance of which the heating element is to be controlled;
- a second connector for electrically coupling the safety device to a power main.

The invention further relates to an assembly of an electrical appliance and the abovementioned safety device, wherein the electrical appliance comprises:
- a fluid reservoir for containing fluid;
- a heating element for heating the fluid being in contact with the heating element;
wherein the first connector of the safety device is connected to a plug of the electrical appliance and the second connector of the safety device is connectable to the power main.

Furthermore, the invention relates to a method for controlling a heating element for heating a fluid in an electrical appliance, preferably using the abovementioned control system, according to claim 12.

Such a safety device, assembly and method provide similar advantages and effects as described with the control system.

These and other features and advantages of the invention will be more fully understood from the following detailed description of certain embodiments of the invention, taken together with the accompanying drawings, which are meant to illustrate and not to limit the invention.

### BRIEF DESCRIPTION OF THE DRAWINGS

Fig. 1 is a schematic illustration of an embodiment of a control system according to the present invention;
Fig. 2 schematically shows a second embodiment of a control system according to the present invention;
Fig. 3 schematically shows a third embodiment of a control system according to the present invention, integrated in an electrical appliance;
Fig. 4 schematically shows a fourth embodiment of the control system according to the invention, integrated in an electrical appliance; and
Fig. 5 schematically shows an assembly of a safety device comprising the control system according to the invention and an electrical appliance.

It is noted that identical or corresponding elements in the different drawings are indicated with identical or corresponding reference numerals.

### DETAILED DESCRIPTION OF EMBODIMENTS

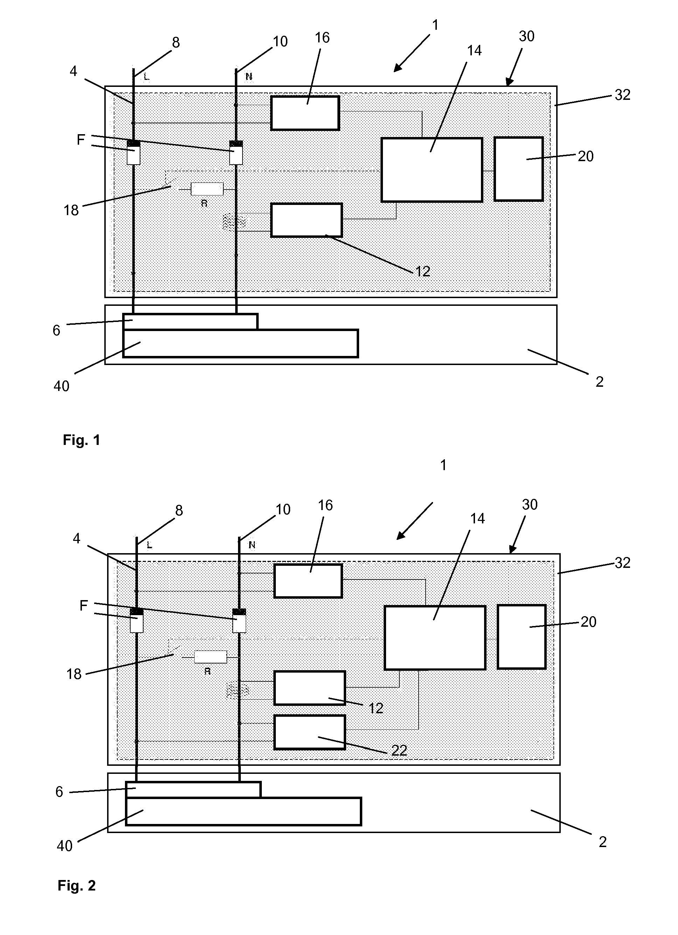

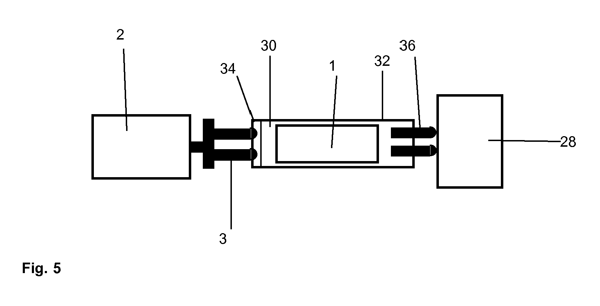

Fig. 1 schematically shows a control system 1 according to the present invention. The control system 1 comprises an electrical network 4 adapted to supply power from a power main (not shown) to at least the heating element 6 of an electrical appliance 2, for instance a domestic appliance like a coffee machine. The electrical network 4 comprises a line wire 8 and a neutral wire 10. In this example, an electric current measurement device 12, such as an ammeter, is provided in series with the neutral wire 10 of the network 4. In a different embodiment of the invention, the current may be measured in a different way, for instance by measuring the magnetic flux or by measuring the temperature change of a well known resistor in the electrical network. Also other methods that are known to the person skilled in the art may be used. The electric current measurement device 12 is electrically coupled to a control unit 14, which is powered by a power supply 16 connected to the electrical network 4. Furthermore, the control unit 14 is connected to a user interface 20. In this embodiment of the invention, the control system 1 is provided as a separate unit, being a safety device 30 comprising a housing 32 enclosing the mentioned components of the control system 1. The safety device 30 further comprises a first connector 34 (see Fig. 5) that electrically couples the safety device 30 to the domestic appliance 2, for instance to a plug 3 of the domestic appliance 2. A second connector 36 is provided that electrically connects the safety device 30 to the power main 28. To operate the appliance 2, power is supplied from the power main 28 via the electrical network 4 of the control system 1 to at least the heating element 6 of the electrical appliance 2.

The electrical appliance 2 is further provided with a fluid reservoir 40 for containing fluid, such as water, to be heated to, for instance, prepare a beverage like coffee. The heating element 6 is arranged with respect to the fluid reservoir 40 such that the fluid is in contact with the heating element 6.

The control system 1 is adapted to control the heating element 6 during heating of a fluid in the electrical appliance 2. When using the domestic appliance 2, water provided in the fluid reservoir 40 is heated by the heating element 6. The fluid may be heated to a desired temperature dependent on the kind of domestic appliance 2. During a heating time cycle the electric current measurement device 12 is measuring a current in the electrical network 4, thus the current that is supplied to the heating element 6. The measured current value is transferred to the control unit 14. Since the resistance of the heating element 6 of the domestic appliance 2 is known, for instance indicated by the manufacturer of the appliance 2, the control unit 14 may determine a voltage value at the measuring moment of the current value. Subsequently, the power that is delivered to the appliance 2 may be determined in dependence of the current value and the voltage value. The power may then be integrated over time resulting in an amount of energy that is supplied to the heating element 6 at that particular moment. Consequently, the control unit 14 calculates a heating element input parameter value, in this case a heating cycle time interval. The control unit 14 may comprise predetermined heating element parameter values, in this case for instance a predetermined heating cycle time interval that may be dependent of appliance parameters, such as the size of the fluid reservoir 40 of the appliance 2, the desired maximum heating temperature of the fluid, for instance between 80-100°C for preparing a beverage, the kind of appliance and the like.

When the control unit 14 detects that the calculated heating cycle time interval exceeds the predetermined heating cycle time interval, the control unit 14 interrupts the power supply to the heating element 6. The power may be interrupted by means of a switch 18, a relay or by a crowbar circuit or the like device that is controlled by the control unit 14.

With the above described control system 1 uncontrolled heating of the heating element 6 may be prevented, thereby preventing the risk of damage to the appliance 2 caused by said uncontrolled heating resulting a minimized risk of injuries to the user of the appliance 2. Since the control system 1 only uses an input parameter, in this case a current value of the electrical network 4 connected to the heating element 6, to determine the heating element input parameter value, occurrence of deviations may be minimized resulting in an accurate determination of the heating element input parameter value. Furthermore, the determination of said input parameter value is not dependent on situations of malfunctioning components of the appliance nor dependent on lack of user interaction with the appliance such as regular de-scaling of the appliance, thereby resulting in a safe control system 1.

In the embodiment of the control system 1 that is described with Figure 1, only the actual current value during operation of the heating element 6 is measured to determine the heating element input parameter value. However, it is also possible to provide the control system 1, in a different embodiment of the invention, with an electric potential difference measurement device 22, such as a voltmeter, instead of with a current value measurement 12 device. The supplied energy and the heating cycle time interval may be determined in a similar way as described with the current value. Of course, the potential difference may be measured with different methods, for instance by using a coil, or it may be determined by measuring the current through a well known shunt resistance. Also other methods to measure the potential difference may be used as will be clear to a skilled person.

In another different embodiment of the control system 1 according to the invention as shown in Figure 2, the heating element input parameter value can be determined based on both the current value and the voltage value. Therefore, the control system 1 as shown in Figure 2 comprises a current value measuring device 12 and a voltage difference measuring device 22. In this embodiment of the control system 1, the system 1 is, like the system 1 according to the first embodiment, a stand alone system. In other words, the safety device 30 comprises the control system 1 that is provided in a housing 32 (see also Fig. 5). For the sake of clarity, only the elements that differ from the system 1 as shown and described with Figure 1 will be described here in detail.

An advantage of measuring both the current value and the voltage value at a certain time interval during the heating cycle of the heating element 6 is that deviations in the indicated resistance value of the heating element 6 are eliminated. When both the current value and the voltage value are known, the power supplied to the appliance 2 can be determined without using the indicated resistance value. Consequently, also the heating cycle time interval may be determined. The control unit 14 compares the determined heating cycle time interval with the predetermined heating cycle time interval and subsequently controls the power supply to the heating element 6 as described more in detail with Figure 1. When measuring the current value and the voltage value a further heating element input parameter value, in this case the resistance or the resistance slope during at least part of the heating cycle time interval may be calculated and compared to a predetermined maximum resistance or resistance slope. In case the maximum resistance or the maximum resistance slope is exceeded the control unit 14 may interrupt the power supply to at least the heating element 6 of the appliance 2.

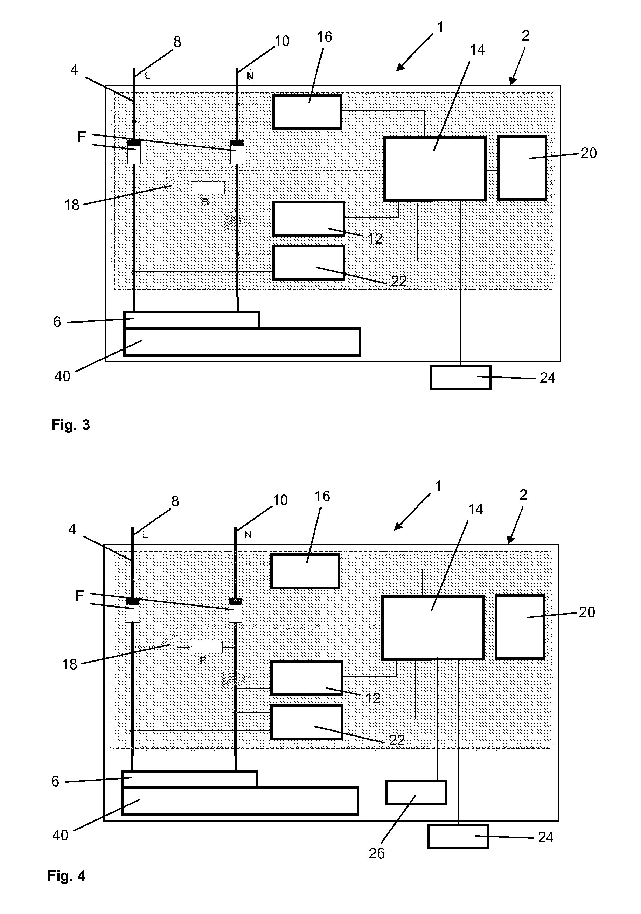

The measured current values and the measured voltage values are preferably stored in the memory of the control unit 14, creating a history of values that can be used to determine when and during what time interval the appliance 2 was used. These values can be used to advantage to adjust the initially stored predetermined heating element parameter values, as will be described with the embodiment of the control system 1 shown in Figure 3.

In the embodiment of the control system 1 that is shown in Figure 3, a temperature measurement device 24 is provided. The temperature measurement device 24 is coupled to the control unit 14 and is adapted to measure the temperature of the air surrounding the domestic appliance 2. The control system 1 is integrated with the domestic appliance 2. The electrical network 4 of the control system 1 is integrated with the electrical network of the appliance 2. The control system 1 operates in a similar way as the system 1 described with Figure 2. For the sake of clarity, only the elements that differ from the system 1 as shown and described with Figures 1 and 2 are described here in detail.

By measuring the temperature of the air surrounding the appliance 2 and transferring the measured temperature values to the control unit 2, a history of temperatures can be stored in the memory of the control unit 2. Furthermore, by storing the measured current values and the measured voltage values and the determined power during a few initial heating cycles of the appliance 2, the volume of the fluid reservoir 40 may be determined. In this embodiment of the invention, the heating element input parameter value may be determined based on measured current values, measured voltage values as well as on measured temperature values. The history of the air temperature values and the history of the supplied power to the heating element, thus a duration of the time interval the appliance 2 was switched on and when the appliance was switched on most recently, enable the control unit 14 to estimate the initial fluid temperature of the fluid, taking the determined volume of the fluid reservoir 40 into account. The fluid temperature in the fluid reservoir 40 may be determined at the start of the heating cycle of the heating element 6. Consequently, the predetermined heating element parameter value can be adjusted to the initial fluid temperature, resulting in a more accurate controlling of the heating element 6 by the control system 1 increasing the above described advantages of the control system 1 even more.

In a different embodiment of the invention, the initial fluid temperature may instead be determined by measuring the resistance of the heating element 6 and using the time history of the appliance 2 that is stored in the control unit 14.

In Figure 4, a similar control system 1 as the system 1 in Figure 3 is shown. For the sake of clarity, only the elements that differ from the system 1 as shown and described with Figure 3 are described here in detail. The control system 1 comprises a pump voltage signal measuring device 26 that is adapted to measure a voltage signal to a fluid pump (not shown) provided in the appliance 2. This measuring device 26 is operatively coupled to the control unit 14. Measured voltage signals are transferred and stored in the memory of the control unit 14 such that the actual pumping time can be determined. Consequently, the heating element input parameter value can be determined on the measured current values, measured voltage values, measured temperature values and the measured voltage signals. Consequently, an even more accurate determination of the heating element input parameter value and the predetermined heating element parameter value is provided resulting in a more accurate detection of the first parameter exceeding the latter, and thus resulting in a control system 1 that is more accurate in controlling the power supply. Or in different words that is more accurate in interrupting the power supply. Consequently, occurrence of false positives, in case the system 1 thinks that the temperature of the fluid in the appliance is too high, or of false negatives, in case the system 1 interrupts the power supply to the heating element 6 too late, is reduced.

In the described embodiments of the control system 1 according to the invention, the electrical network 4 is provided with fuses F. In case that at least one of the fuses F is blown, the appliance 2 can not be used until the cause that resulted in breaking the fuse F is removed and the fuse F is replaced. The control system 1 may be used to advantage in appliances 2 with a relatively large water reservoir 40, thus when the fluid to be heated comprises a relatively large quantity, for instance in domestic appliances 2 like coffee machines, espresso machines, steam irons and the like.

In Figure 5 an assembly of a domestic appliance 2 and a safety device 30 comprising any of the control systems 1 as above described in the previous embodiments of the invention. As mentioned before, the first connector 34 of the safety device 30 is connected to the domestic appliance 2. The second connector 36 of the safety device 30 is connected to the power main 28. The connectors 34, 36 are removably connected. This enables that the safety device 30 can be released from the domestic appliance 2 and be used on a different domestic appliance 2. The safety device 30 can be sold as a separate device and be used on appliances 2 that are already on the market or already sold to a user. However, in a different embodiment of the safety device 30 according to the invention, the first connector 34 may be inseparably coupled to the plug 3 of the domestic appliance 2. Thus, after the first time the safety device 30 is connected to the appliance 2, the device 30 can not be removed any more thereby ensuring constant operation of the control system 1 even when the appliance 2 is connected to different power mains.

Although illustrative embodiments of the present invention have been described with reference to the accompanying drawings, it is to be understood that the invention is not limited to these embodiments. For instance, different current value measurement devices and/or different voltage measurement devices that are known to the person skilled in the art may be used. Also different temperature measurement devices may be used. The control system 1 may be integrated in a domestic appliance 2 in different ways or may be provided in a separate safety device 30. The safety device 30 may have different kinds of constructions and may comprise different elements. Furthermore, the control system 1 may be used with different kinds of electrical appliances comprising a fluid reservoir 40 and a heating element 6 to heat the fluid from the reservoir 40. The electrical network 4 may be provided in different compositions.

Various changes or modifications may be effected by one skilled in the art without departing from the scope or the spirit of the invention as defined in the claims. Accordingly, reference throughout this specification to "one embodiment" or "an embodiment" means that a particular feature, structure or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, it is noted that the particular features, structures, or characteristics may be combined in any suitable manner in one or more embodiments.

## Claims

1. A control system (1) for controlling a heating element (6) for heating a fluid in an electrical appliance (2), wherein the control system comprises following components:
an electrical network (4) adapted to supply power from a power main (28) to at least the heating element of the electrical appliance;
at least one of an electric current measurement device (12) for measuring a current value in said network during operation of the electrical appliance, and an electric potential difference measurement device (22) for measuring a voltage value in said network during operation of the electrical appliance;
a control unit (14) for determining a heating element input parameter value at least based on the measured current value and/or the measured voltage value and comparing said determined input parameter value with a predetermined heating element parameter value stored in the control unit;
wherein the control unit is further adapted to interrupt a power supply to at least the heating element in case the heating element input parameter value is exceeding the predetermined parameter value.

2. Control system according to claim 1, wherein the heating element input parameter value is at least one of a heating cycle time interval, a maximum resistance value of the heating element, a resistance slope of the heating element during at least part of the heating cycle time interval.

3. Control system according to claim 1, wherein the control system further comprises a temperature measurement device (24) adapted to measure a temperature of air surrounding the electrical appliance, wherein the temperature measurement device is operatively coupled to the control unit and the control unit is adapted to determine the predetermined heating element parameter value as well based on the measured temperature.

4. Control system according to any one of the preceding claims, wherein the control system further comprises a pump voltage signal measurement device (26) for measuring a voltage signal to a fluid pump of the electrical appliance, which measurement device is operatively coupled to the control unit and the control unit is adapted to determine the heating element input parameter value as well based on the measured pump voltage signal.

5. Control system according to any one of the preceding claims, wherein the predetermined heating element parameter value is based on parameter values initially stored in the control unit and measured values from the respective measurement devices during at least one heating cycle of the heating element.

6. Control system according to any one of the preceding claims, wherein the initially stored parameter values comprise a predetermined relation between a current value, a voltage value, an air temperature surrounding the appliance and/or appliance parameters, such as a heating cycle time interval, a size of a fluid reservoir of the appliance, desired maximum heating temperature of the fluid, kind of the appliance and the like.

7. Safety device (30) for controlling a heating element for heating a fluid of an electrical appliance, said safety device comprising the control system according to any one of the preceding claims, the device further comprising:
- a housing (32) enclosing the components of the control system;
- a first connector (34) for electrically coupling the safety device to the electrical appliance of which the heating element is to be controlled;
- a second connector (36) for electrically coupling the safety device to a power main.

8. An assembly of an electrical appliance and a safety device according to claim 7, wherein the electrical appliance comprises:
- a fluid reservoir (40) for containing fluid;
- a heating element (6) for heating the fluid being in contact with the heating element;
wherein the first connector (34) of the safety device is connected to a plug (3) of the electrical appliance and the second connector (36) of the safety device (30) is connectable to the power main.

9. Assembly according to claim 8, wherein the second connector of the safety device and the plug of the electrical appliance are inseparably coupled.

10. An electrical appliance comprising:
- a fluid reservoir (40) for containing fluid;
- a heating element (6) for heating the fluid being in contact with the heating element;
- the control system (1) according to any one of the claims 1-6, wherein the electric network of the system is integrated with an electric network of the electrical appliance.

11. Electrical appliance according to claim 10, wherein the electrical appliance is domestic appliance such as an espresso machine, a coffee machine, a steam iron or the like domestic appliances.

12. Method for controlling a heating element (6) for heating a fluid in an electrical appliance, preferably using a control system (1) according to any one of claims 1-6, comprising the steps of:
a) measuring at least one of a current value and a voltage value in an electric network between the heating element of the electrical appliance and a power main;
b) determining a heating element input parameter value at least based on the measured current value and/or the measured voltage value;
c) comparing the determined heating element input parameter value with a predetermined heating element parameter value;
d) interrupting the power supply to at least the heating element when the determined heating element input parameter value exceeds the predetermined heating element parameter value such that uncontrolled heating of the heating element is prevented.

13. Method according to claim 12, wherein determining the heating element input parameter is further based on measuring of a temperature of air surrounding the electrical appliance.

14. Method according to claim 12 or 13, wherein measured values are stored in a control unit (14) of the control system.

15. Method according to any one of claim 14, wherein before determining the heating element input parameter value an initial fluid temperature is determined based on the stored values, wherein the predetermined heating element parameter value is adjusted to the initial fluid temperature.
